# EUROPEAN PATENT APPLICATION

(11) **EP 0 823 320 A1**
(43) Date of publication of application: **11.02.1998**
(21) Application number: 97903604.3
(22) Date of filing: 26.02.1997
(51) Int. Cl.: B29C 65/02, B29C 65/56, B29C 65/70, B29C 43/18, B29K 105/06

(54) **METHOD OF MANUFACTURING COMPOSITE**

(30) Priority: 27.02.1996 JP 40034/96; 14.03.1996 JP 57367/96
(71) Applicant: SUMITOMO CHEMICAL COMPANY LIMITED, Osaka-shi, Osaka 541 (JP); KAWASAKI STEEL CORPORATION, Chuo-ku, Kobe-shi, Hyogo 651 (JP); K-Plasheet Corporation, Chiba-shi, Chiba 260 (JP)
(72) Inventor: MASUI, Syohei, Soraku-gun, Kyoto 619-02 (JP); FUNAKOSHI, Satoru, Osaka-shi, Osaka 533 (JP)
(74) Representative: VOSSIUS & PARTNER
(86) International application number: JP9700545
(87) International publication number: WO9731772

(57) **Abstract**

A method of making a composite article in which a resin molded article and a porous fiber-reinforced thermoplastic resin sheet are laminated together, the method including the steps of:
placing, between first and second molds which are in an open state, a resin molded article having at least one pin-shaped protrusion made of a thermoplastic resin on a surface thereof and a first porous fiber-reinforced thermoplastic resin sheet which is in a softened state due to heating;
closing the first and second molds, so as to stick the resin sheet with the pin-shaped protrusion and mold the resin sheet into a desired form;
solidifying the resin sheet by cooling while maintaining the first and second molds in a closed state; and
removing the composite article by opening the first and second molds.

## Description

### Technical Field

The present invention relates to a method of making a composite article in which a porous fiber-reinforced thermoplastic resin sheet is attached to a part or the whole of one or both of surfaces of a resin molded article.

### Background Art

Since porous fiber-reinforced thermoplastic resin sheets have a light weight and are excellent in terms of strength, they are widely used as soundproof material such as automobile engine cover, heat-insulating material, interior material, exterior material for electric home appliances, building material, and the like. Usually, such a porous fiber-reinforced thermoplastic resin sheet is used as a composite article combined with a resin molded article so as to be attached to other members.

In order to make such a composite article, a resin molded article, which becomes a base material, and a porous fiber-reinforced thermoplastic resin sheet are respectively molded into their desired forms; and then they are bonded together by an adhesive or the like (e.g., Japanese Patent Application Laid-Open No. 6-156161).

Such a conventional method, however, has not been sufficient in terms of apparatus, time, process, and cost, since molds are respectively necessary for the resin molded article and the porous fiber-reinforced thermoplastic resin sheet, its process is elongated, and so on. Also, in the case where the bonding is effected by an adhesive, it has been problematic in that the resin sheet is likely to peel off from the base material due to deterioration of the adhesive, for example.

### Disclosure of Invention

It is an object of the present invention to provide a method of easily and efficiently unifying and making a composite article, in which a porous fiber-reinforced thermoplastic resin sheet is attached to a part or the whole of one or both of surfaces of a resin molded article, without using an adhesive or the like.

The method in accordance with the present invention is a method of making a composite article in which a resin molded article and a porous fiber-reinforced thermoplastic resin sheet are laminated together, the method including the steps of:
placing, between first and second molds which are in an open state, a resin molded article having at least one pin-shaped protrusion made of a thermoplastic resin on a surface thereof and a first porous fiber-reinforced thermoplastic resin sheet which is in a softened state due to heating (e.g., placing the first porous fiber-reinforced thermoplastic resin sheet between the resin molded article and the first mold);
closing the first and second molds, so as to stick the resin sheet with the pin-shaped protrusion and mold the resin sheet into a desired form;
solidifying the resin sheet by cooling while maintaining the first and second molds in a closed state; and
removing the composite article by opening the first and second molds.

The resin molded article in accordance with the present invention may have at least one pin-shaped protrusion made of a thermoplastic resin on each of both surfaces thereof. In this case, it is preferred that the method further comprise a step of placing, between the resin molded article and the second mold, a second porous fiber-reinforced thermoplastic resin sheet which is in a softened state due to heating.

In accordance with the method of the present invention, since a force (restoring force) caused by expansion of the porous fiber-reinforced thermoplastic resin itself acts on the outer peripheral surface of the pin-shaped protrusion inserted into the porous fiber-reinforced thermoplastic resin sheet, a sufficient bonding strength is obtained, whereby the resin molded article and the resin sheet are securely united together by way of the pin-shaped protrusion.

In the method of the present invention, it is preferred that a portion of the molds opposing the pin-shaped protrusion be provided with a first recess into which at least a tip portion of the pin-shaped protrusion is insertable when the molds are brought into a closed state. In this case, the distance between the outer peripheral surface of the pin-shaped protrusion and the inner wall surface of the first recess in the closed state of molds is preferably within the range of 0.2 to 10 mm. Also, the first recess may be disposed on a first pedestal which is formed at a portion of the molds opposing the pin-shaped protrusion and has a cross-sectional area greater than the bottom surface area of the first recess and a desired height.

In the case where the molds are thus provided with the first recess into which the tip portion of the pin-shaped protrusion is insertable, a part of the porous fiber-reinforced thermoplastic resin is pushed into the first recess together with the pin-shaped protrusion, whereby the force (restoring force) acting on the outer peripheral surface of the pin-shaped protrusion caused by expansion of the porous fiber-reinforced thermoplastic resin tends to become greater. Accordingly, the bonding strength between the pin-shaped protrusion and the resin sheet is enhanced, whereby the resin molded article and the resin sheet are united together more securely by way of the pin-shaped protrusion.

In the method of the present invention, it is preferred that the length of the pin-shaped protrusion be equal to or greater than the thickness of the resin sheet before molding, so that the pin-shaped protrusion is stuck into the resin sheet so as to penetrate therethrough. In this case, the tip portion of the pin-shaped protrusion may be crushed as well.

In the case where the pin-shaped protrusion thus penetrates through the resin sheet, the bonding strength between the pin-shaped protrusion and the resin sheet becomes greater, whereby the resin molded article and the resin sheet tend to be united together more securely by way of the pin-shaped protrusion.

Further, in the method of the present invention, a part of the surface of the resin molded article may be provided with a first shear surface made of a surface substantially in parallel with a closing direction of the first and second molds, while a part of a surface of the molds may be provided with a second shear surface corresponding to the first shear surface. In this case, in the step of closing the first and second molds, a part of the resin sheet is cut off by the portion of the resin molded article including the first shear surface and by the second shear surface. More specifically, a part of the resin sheet is cut off as at least a part of the first shear surface and at least a part of the second shear surface are brought into contact with each other or as at least a part of the portion of the resin molded article including the first shear surface is shaved off with the second shear surface (in the latter case, the part of the resin molded article including the first shear surface and the part of the first mold including the second shear surface preferably do not overlap each other with a width greater than 5 mm in a direction perpendicular to the closing direction of molds). The first shear surface may be formed as a side face of a first protruded portion formed on a surface of the resin molded article, whereas the second shear surface may be formed as a side face of a second protruded portion formed on a surface of the molds.

In the case where the resin molded article and the molds are thus respectively provided with the first and second shear surfaces, when the resin sheet is laminated onto the resin molded article, the resin sheet is eliminated from a specific portion of the surface of the molded article (e.g., opening portion of the resin molded article) where the resin sheet is unnecessary. Accordingly, in the case where the composite article is to be attached to another member, it becomes unnecessary to perform such operations as partially peeling off the resin sheet from the resin molded article, which is the base material, only at the attachment portion thereof and cutting off a portion of the resin sheet covering the opening portion formed in the base material itself, whereby the working efficiency tends to improve remarkably.

In the method of the present invention, the resin sheet may be stuck with the pin-shaped protrusion and molded into a desired form such that a hollow portion is formed between the resin molded article and the resin sheet. In this case, it is preferred that the pin-shaped protrusion be connected to its corresponding mold by way of a second pedestal having a cross-sectional area greater than the base portion of the pin-shaped protrusion and a desired height. In the case where the hollow portion is thus formed between the resin molded article and the resin sheet, the resulting composite article tends to exhibit improved soundproof characteristics and the like.

Further, a thermoplastic resin film may be attached to at least a part of a surface of the porous fiber-reinforced thermoplastic resin sheet. In this case, at the time when the composite article is used, the resin sheet is prevented from absorbing oil and moisture, whereby characteristics of soundproof, heat insulation, and the like tend to be kept from deteriorating.

The above-mentioned "open state" is defined as a state wherein a cavity clearance between the first and second molds is larger than the thickness of a desired product (composite article). On the other hand, the above-mentioned "closed state" is defined as a state wherein the cavity clearance between the first and second molds coincides with the thickness of the desired product. In the method of the present invention, the open state includes a first open state wherein the first and second molds are arranged with a cavity clearance therebetween such that the composite article can be removed therefrom, and a second open state wherein the cavity clearance is smaller than that in the first open state.

### Brief Description of Drawings

Fig. 1 is a schematic cross-sectional view showing an example of a resin molded article in accordance with the present invention;
Fig. 2 is a schematic cross-sectional view showing an example of a pin-shaped protrusion in accordance with the present invention;
Fig. 3 is a schematic cross-sectional view showing an example of a relationship between a rib-shaped protrusion and a sliding member in accordance with the present invention;
Fig. 4 is a schematic cross-sectional view showing an example of an apparatus for carrying out the method of the present invention;
Figs. 5 and 6 are schematic cross-sectional views showing states of a resin molded article and a porous resin sheet in the respective manufacturing steps in an example of the method of the present invention;
Fig. 7 is a schematic cross-sectional view showing an example of a composite article obtained by the method of the present invention;
Figs. 8 and 9 are schematic cross-sectional views showing states of the resin molded article and porous resin sheet in the respective manufacturing steps in another example of the method of the present invention;
Fig. 10 is a schematic cross-sectional view showing another example of the composite article obtained by the method of the present invention;
Fig. 11 is a schematic cross-sectional view showing a state of the resin molded article and porous resin sheet in a manufacturing step in still another example of the method of the present invention;
Figs. 12 and 13 are schematic cross-sectional views showing states of the resin molded article and porous resin sheet in the respective manufacturing steps in still another example of the method of the present invention;
Fig. 14 is a schematic cross-sectional view showing another example of the relationship between the rib-shaped protrusion and the sliding member in accordance with the present invention;
Figs. 15 and 16 are respectively cross-sectional views of other examples of the resin molded article in accordance with the present invention;
Figs. 17 and 18 are schematic cross-sectional views showing states of the resin molded article and porous resin sheet in the respective manufacturing steps in still another example of the method of the present invention;
Fig. 19 is a schematic cross-sectional view showing still another example of the composite article obtained by the method of the present invention;
Figs. 20 and 21 are schematic cross-sectional views showing states of the resin molded article and porous resin sheet in the respective manufacturing steps in still another example of the method of the present invention;
Fig. 22 is a schematic cross-sectional view showing still another example of the composite article obtained by the method of the present invention;
Figs. 23A to 23E are respectively schematic cross-sectional views showing other examples of the pin-shaped protrusion in accordance with the present invention; and
Fig. 24 is a schematic cross-sectional view showing still another example of the composite article obtained by the method of the present invention.

### Best Mode for Carrying Out the Invention

In the following, preferred embodiments of the present invention will be explained in further detail with reference to the accompanying drawings. Among the drawings, portions identical or equivalent to each other will be referred to with marks identical to each other.

The present invention is a method of making a composite article in which a porous fiber-reinforced thermoplastic resin sheet is laminated on (attached to) a part or the whole of one or both of surfaces of a resin molded article. First, the resin molded article and porous fiber-reinforced thermoplastic resin sheet used in the present invention will be explained.

In the method of the present invention, as will be explained later, the resin molded article itself, on which the porous fiber-reinforced thermoplastic resin sheet will be laminated, functions as one mold for the resin sheet. The resin molded article in the present invention becomes a base material for the composite article, i.e., product, and may have any form.

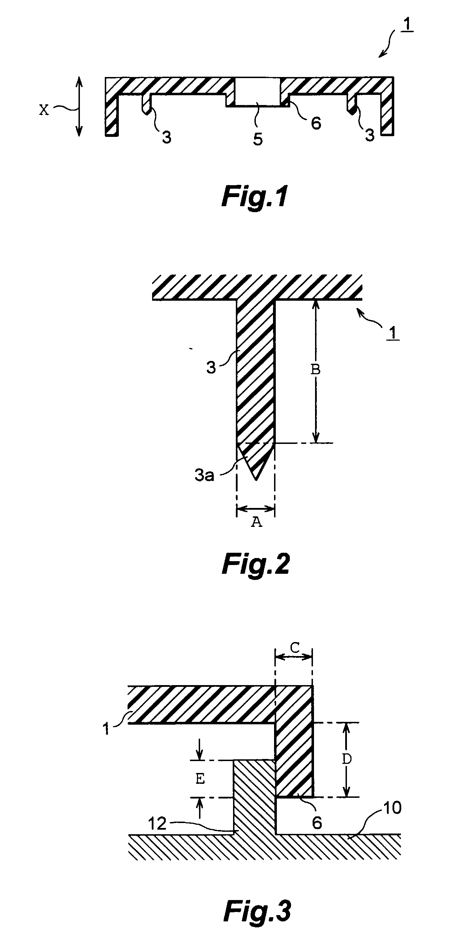

Fig. 1 shows a resin molded article (1), used in an embodiment of the present invention, having a planar main part. As shown in Fig. 1, the resin molded article (1) in accordance with this embodiment is provided with pin-shaped protrusions (3) at a surface portion where a porous fiber-reinforced thermoplastic resin sheet (2; which may also be simply referred to as "porous resin sheet" hereinafter), explained later, is to be laminated.

Since the pin-shaped protrusions (3) become joining points for laminating the porous resin sheet (2) onto the resin molded article (1), at least one such protrusion is necessary at the surface portion where the porous resin sheet (2) is to be laminated.

The number of these pin-shaped protrusions (3) may vary depending on the size of the porous resin sheet (2) to be laminated, the form of the resin molded article (1) at the surface portion for lamination, the kind and thickness of the porous resin sheet (2) used, or the like. For example, one piece of the pin-shaped protrusion (3) is sufficient for the case where the porous resin sheet (2) to be laminated has a small area. When this area is large, by contrast, a plurality of pin-shaped protrusions (3) are disposed at both end portions of this area, at its peripheral end portion or on the inside thereof with appropriate intervals, or further at its center portion.

Though the material, method of attachment, or the like of the pin-shaped protrusion (3) is arbitrary as long as it can securely be united with the resin molded article (1); it is usually made unitedly with the resin molded article (1), which is the base material, of the same resin as the base material resin, at the same time when the resin molded article (1) is molded.

In the manufacturing process for the composite article of the present invention, the pin-shaped protrusion (3) is stuck into the porous resin sheet (2), which is in a softened state due to heating. As a force (restoring force) caused by expansion of the resin itself at the peripheral portion of the stuck area in the resin sheet (2) acts on the outer peripheral surface of the pin-shaped protrusion (3), the pin-shaped protrusion (3) is united (crimped) with the porous resin sheet (2). Thus, the porous resin sheet (2) is secured to (laminated on) the resin molded article (1) by way of the pin-shaped protrusion (3).

In view of the aimed object mentioned above, the thickness (A; see Fig. 2) of the pin-shaped protrusion (3) is adjusted to a preferred range according to material characteristics of its material resin such as compressive strength, flexural modulus, flexural strength, and hardness; the kind and content of reinforcement fiber in the porous resin sheet (2) to be stuck therewith; the kind of the matrix resin; the thickness of the porous resin sheet (2); and the like. In the case where the thickness (A) of the pin-shaped protrusion (3) is too small, it may not endure heat and resistance at the time of sticking, thereby failing to stick into the porous resin sheet (2) or, even if it sticks therein, the porous resin sheet (2) will easily peel off therefrom due to its weak holding force. Also, the pin-shaped protrusion (3) itself becomes likely to break off from the resin molded article (1). In the case where the pin-shaped protrusion (3) is too thick, on the other hand, it becomes hard for the protrusion to stick into the porous resin sheet (2), whereby the latter is likely to peel off. Also, the weight of the protrusion increases. Further, when the pin-shaped protrusion (3) is unitedly molded, sinks are likely to occur at the back face portion of the pin-shaped protrusion (3), thereby deteriorating the appearance of the resin molded article (1) itself. Accordingly, the thickness (A) of the pin-shaped protrusion (3) is preferably within the range on the order of 3 to 10 mm. In the case where the pin-shaped protrusion (3) is crushed at the time of sticking, methods such as those in which a material resin having a material characteristic (rigidity) superior to that of the matrix resin of the porous resin sheet (2) or a material resin having a high melting point is used as the material of the pin-shaped protrusion (3) and in which a fiber reinforcement is used to enhance the rigidity of the pin-shaped protrusion (3) may be employed as measures against it.

The length (B; see Fig. 2) of the pin-shaped protrusion (3) may vary depending on the thickness of the porous resin sheet (2), the force required for securing the resin sheet (bonding strength required between the protrusion (3) and the resin sheet (2)), the form of a recess (first recess: 11) formed in a mold (10), which will be explained later, for receiving the pin-shaped protrusion (3), the processing method of a tip portion (3a) of the pin-shaped protrusion (3), and the like. Nevertheless, it is preferably at least 1/2 of, more preferably at least 3/4 of, and particularly preferably at least equal to the thickness of the porous resin sheet (2) at the time when it is in a softened state due to heating. The upper limit of the length (B) of the pin-shaped protrusion (3), which is not restricted in particular since it may vary according to the method of processing the tip portion (3a) of the pin-shaped protrusion (3), is preferably not greater than twice and more preferably not greater than 1.5 times that of the above-mentioned thickness.

Preferably, the tip portion (3a) of the pin-shaped protrusion (3) is in a sharp state so that the pin-shaped protrusion (3) easily sticks into the porous resin sheet (2). It has a conical form in this embodiment, for example.

The resin molded article (1) in accordance with this embodiment has an opening portion (5) at its main part. In this embodiment, the opening portion (5) is disposed such that the opening direction (longitudinal direction) becomes in parallel with the opening and closing directions of molds (closing directions X) in the subsequent molding step (closing step). Also, the opening portion (5) is intended to yield a composite article having a portion corresponding thereto not covered with the porous resin sheet (2), and a rib-shaped protrusion (first protruded portion: 6) is disposed along the periphery of the opening portion (5; see Fig. 1).

In the case where the opening portion (5) is thus formed in the resin molded article (1) such that its longitudinal direction becomes in parallel with the opening and closing directions X of molds, while it is intended to yield a composite article in which the opening portion (5) is not covered with the porous resin sheet (2); the rib-shaped protrusion (6) is usually formed unitedly with the resin molded article (1), which is the base material, in a continuous plate-like form along the periphery of the opening portion (5) so as to surround it.

The rib-shaped protrusion (6), together with a sliding member (second protruded portion: 12) formed in the first mold (10), which will be explained later, constitutes a cutting member for severing the porous resin sheet (2). Accordingly, the rib-shaped protrusion (6) is adjusted to a thickness (C) and ejecting height (D) necessary for the severing operation (see Fig. 3) according to the compressive strength of the resin forming it, the kind and content of reinforcement fiber in the porous resin sheet (2) to be severed, the kind of the matrix resin, and the like.

In the case where the thickness of the rib-shaped protrusion (6) is too thin, it cannot endure the heat and shearing force of the porous resin sheet (2) at the time of severing. In the case where it is thick more than necessary, by contrast, sinks are likely to occur at the back face portion (design side) of the rib-shaped protrusion (6) at the time when the resin molded article (1) is made, thereby generating a problem in terms of appearance or increasing the weight. Accordingly, in general, the thickness (C) of the rib-shaped protrusion (6) is preferably on the order of 1 to 10 mm.

The ejecting height (D) of the rib-shaped protrusion (6), which also relates a sliding length (E) between it and the sliding member (12) formed in the first mold (10) adapted to come into contact therewith at the time of the severing operation, is determined such that a sufficient sliding length (E) is attained. Though the sliding length (E) is appropriately selected according to the physical property of the material resin or the like, it is shorter as the material is harder in general. It is preferably at least 1 mm and more preferably at least 3 mm, while being not greater than the ejecting height (D) of the rib-shaped protrusion (6).

Examples of the resin constituting the resin molded article (1) include typical thermoplastic resins used in extrusion, injection molding, press molding, or the like such as polyethylene, polypropylene, polystyrene, acrylonitrile/styrene/butadiene copolymer, polyvinyl chloride, polyamide, polycarbonate, polyethylene terephthalate, polybutylene terephthalate, polyphenylene ether, styrene/acrylonitrile copolymer, and acrylic resin; their mixtures; polymer alloys using these thermoplastic resins; their modified products; and thermosetting resins used for SMC (Sheet Molding Compounds) or the like. Though they are appropriately selected according to the purpose of use, required strength, lightness of weight, heat resistance, and the like, thermoplastic resins are preferable in view of their bonding characteristic with respect to the porous fiber-reinforced thermoplastic resin, molding cost, moldability, and the like.

Such resins may contain organic or inorganic fiber, metal fiber, fillers such as talc and mica, and, of course, various kinds of compounding agents usually used.

Without being restricted in particular, the form, size, and the like of the porous fiber-reinforced thermoplastic resin sheet (2) used in the present invention are appropriately selected according to the aimed composite article, the resin molded article used, and the like.

The porous fiber-reinforced thermoplastic resin sheet (2) in accordance with the present invention is not restricted in particular as long as it is a porous resin sheet in which a number of continuous voids are formed in a fiber-reinforced thermoplastic resin sheet reinforced with a reinforcement fiber. Examples thereof are as follows. Namely, when various kinds of sheet-like molding materials, such as:
(1) a sheet-like molding material obtained by a method comprising the steps of sticking a plurality of strand-like reinforcement fibers with a needle such that the fibers are entangled with each other so as to yield a mat-like strand reinforcement fiber, laminating a thermoplastic resin thereon, and heating and pressing thus obtained laminate;
(2) a sheet-like molding material obtained by a method comprising the steps of attaching a melt thermoplastic resin to a bundle of reinforcement fibers, and pressing them together;
(3) a sheet-like molding material obtained by a method comprising the steps of dispersing a powder resin into a reinforcement fiber, and heating and pressing the resulting dispersion;
(4) a sheet-like molding material (fiber-reinforced thermoplastic resin sheet formed by a filtering method) obtained by a method comprising the steps of uniformly dispersing and mixing a reinforced fiber and a thermoplastic resin powder in water, filtering thus obtained suspension to yield a nonwoven material, and heating and pressing the nonwoven material; are heated so as to make it expand in the thickness direction of the material sheet, a fiber-reinforced thermoplastic resin sheet with a high porosity usable in the present invention can be obtained. Among others, the porous fiber-reinforced thermoplastic resin sheet resulting from the fiber-reinforced thermoplastic resin sheet formed by a filtering method is preferable for the present invention in that, in addition to the freedom in dispersibility and mixing ratio of the resin and reinforcement fiber, the expanding ratio is so high that a porous fiber-reinforced thermoplastic resin having a higher porosity can easily be obtained.

Examples of reinforcement fibers used in such a fiber-reinforced thermoplastic resin sheet include metal fibers such as stainless fiber, inorganic fibers such as glass fiber and carbon fiber, organic fibers such as aramid fiber, and their mixed fibers. Though they are appropriately selected according to required characteristics; glass fiber, among others, is most preferably used since it can yield high soundproof and heat-insulating characteristics as well as reinforcing effects at a low cost.

As such a reinforcement fiber, a fiber having a diameter of 1 to 50 µm and a length of 3 to 50 mm (5 to 50 mm in particular) is preferably used.

The reinforcement fiber content in the fiber-reinforced thermoplastic resin sheet is appropriately selected according to its aimed object. In general, as the reinforcement fiber content decreases, the expansion ratio becomes smaller, whereby a porous fiber-reinforced thermoplastic resin sheet having a low porosity is obtained; whereas, as the reinforcement fiber content increases, the expansion ratio becomes greater, whereby a porous fiber-reinforced thermoplastic resin sheet having a high porosity is obtained. Nevertheless, the content of the reinforcement fiber is preferably within the range of 10 to 70% by weight since there is a tendency that the mechanical strength or the form retention of the reinforcement fiber itself deteriorates when its content is too high.

In such a reinforcement fiber, in order to improve its adhesion to the matrix resin at the time when the fiber-reinforced thermoplastic resin sheet is manufactured, the fiber surface may be subjected to sizing processing.

Examples of the matrix resin for the fiber-reinforced thermoplastic resin sheet include thermoplastic resins generally used in extrusion, injection molding, press molding, or the like such as polyolefin resins exemplified by polyethylene and polypropylene; typical thermoplastic resins such as polystyrene, acrylonitrile/styrene/butadiene copolymer, polyvinyl chloride, polyamide, polycarbonate, polyethylene terephthalate, polybutylene terephthalate, polyphenylene ether, and styrene/acrylonitrile copolymer; thermoplastic elastomers; their mixtures; polymer alloys using these thermoplastic resins; and their modified products. The thermoplastic resin in accordance with the present invention encompasses all of them.

Such a thermoplastic resin may contain any of usually compounded various kinds of compounding agents such as stabilizer, pigment, and filler.

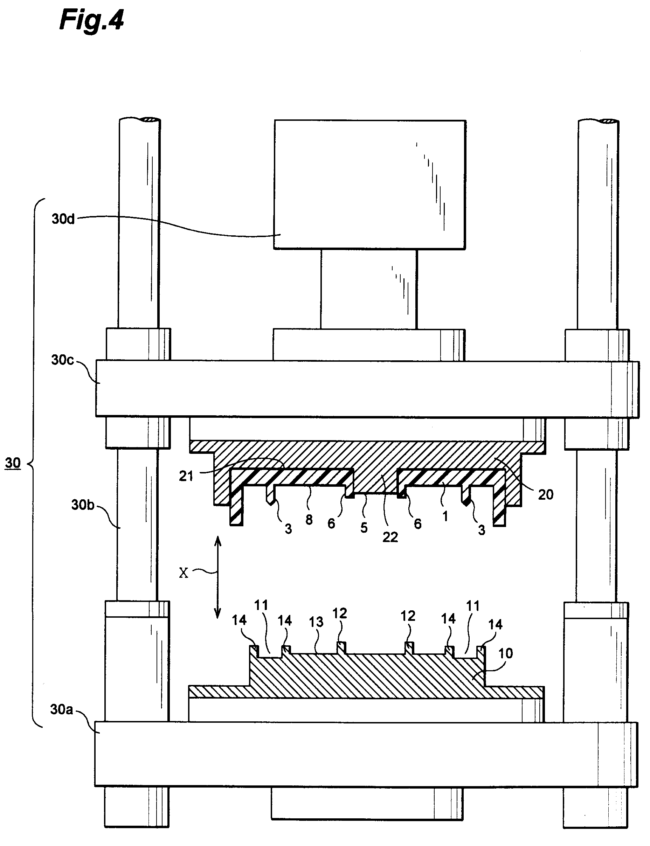

In the following, a mold assembly used in this embodiment will be explained. As shown in Fig. 4, the mold assembly in accordance with this embodiment is constituted by the first mold (10) and a second mold (20), each of which is attached to a press unit (30). Referring to Fig. 4, the first mold (10: fixed mold) is fixed to a fixed frame (30a) of the press unit (30). The second mold (20: movable mold) is fixed to a movable frame (30c) connected to the fixed frame (30a) through a connecting rod (30b). A driving unit (30d) of the second mold (20) is connected to the movable frame (30c), so that the second mold (20) can be moved in directions X (indicated by double-ended arrow X). The driving unit (30d) of the second mold (20) is not particularly limited. For example, a hydraulic driving unit is used.

The second mold (20), functioning as a holding member for the resin molded article (1), comes into contact with the inside of a cavity face (molding surface: 21) of the second mold (20) so as to hold the resin molded article (1). The holding method is not limited in particular as long as the second mold (20) can hold the resin molded article (1). For example, a method based on vacuum suction, a method in which the outer periphery is held by means of an air cylinder, and the like may be employed. Alternatively, the second mold (20) and the resin molded article (1) may simply be mated together by means of frictional resistance or the like. Also, the second mold (20) is provided with a protrusion (22) which can closely mate with the opening portion (5) of the resin molded article (1), whereby the rib-shaped protrusion (6) is prevented from tilting toward the inside of the opening portion (5) or breaking due to the sliding action between the outer peripheral surface of the rib-shaped protrusion (6) and the inner peripheral surface of the sliding member (12) of the first mold (10), and a cut fraction of the porous resin sheet (2) is further prevented from entering the opening portion (5).

The resin molded article (1) held by the second mold (20) functions as one mold with respect to the porous resin sheet (2), whereas the first mold (10) functions as the other mold. Accordingly, the resin molded article (1) and the first mold (10) respectively have cavity faces (8, 13) opposing each other and corresponding to the shape of the desired porous resin sheet. When the first mold (10) and the second mold (20) are closed, the cavity faces (8, 13) define a cavity coinciding with the outer shape of the desired porous resin sheet.

The second mold (20) can be moved, by the press unit (30), among (i) a first open position where a cavity clearance between the cavity face (13) of the first mold (10) and a cavity face (21) of the second mold is maintained in a state (first open state) wherein the composite article between the first and second molds can be removed, (ii) a second open position where the cavity clearance is maintained in a state (second open state) to be smaller than that in the first open state, and (iii) a closed position where the cavity clearance is maintained in a state (closed state) to substantially match the thickness of the desired composite article. The first and second molds (10, 20) can be maintained at a predetermined closing pressure by the press unit (30).

Note that the first and second molds shown in Fig. 4 are in the first open state. The first mold may be a movable mold while the second mold may be a fixed mold, or both of them may be movable molds. Furthermore, the first mold may be an upper mold while the second mold may be a lower mold.

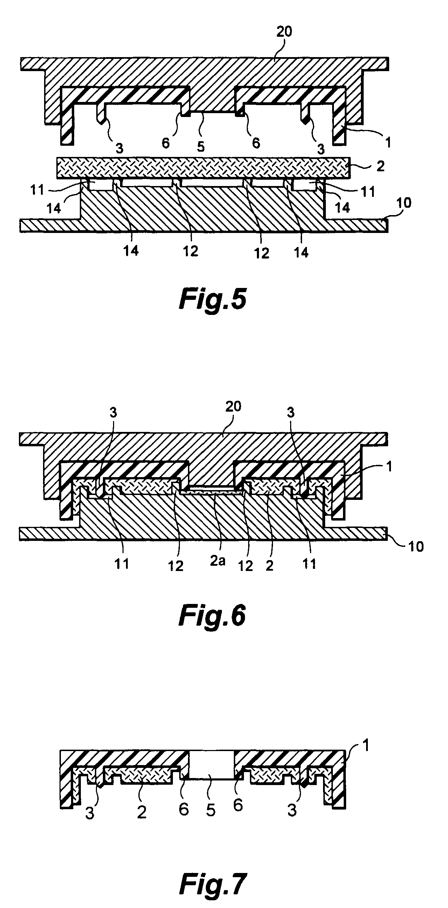

In this embodiment, as shown in Fig. 5 (second open state), the porous resin sheet (2), which is in a softened state due to heating, is placed on the first mold (10), whereas the recess (first recess: 11), into which the pin-shaped protrusion (3) formed in the resin molded article (1) is insertable, is formed in the first mold (10) at a position corresponding to the pin-shaped protrusion (3). The recess (11) is further effective in compressing the porous resin sheet (2), stuck with the pin-shaped protrusion (3) in the recess (11), against the outer peripheral surface of the pin-shaped protrusion (3) so as to be crimped therewith. The recess (11) in this embodiment has such a depth that the tip portion of the stuck pin-shaped protrusion (3) does not reach the bottom portion thereof.

The recess (11) is usually provided with a form corresponding to the cross-sectional form of the pin-shaped protrusion (3). Namely, when the pin-shaped protrusion (3) is inserted into the recess (11), an appropriate gap is formed between the outer peripheral surface of the pin-shaped protrusion (3) and the inner surface of the recess (11) such that the peripheral portion of the stuck area of the porous resin sheet (2) is compressed against the outer peripheral surface of the pin-shaped protrusion (3) and more firmly crimped therewith.

This gap may be made smaller in the case where the material of the pin-shaped protrusion (3) to be inserted is excellent in compressive strength, flexural modulus, flexural strength, hardness, and the like, since the pin-shaped protrusion (3) can easily stick into the porous resin sheet (2). When the material of the pin-shaped protrusion (3) has a low physical characteristic and is easily deformed, a larger gap is necessary.

When the gap is too small, the porous resin sheet (2) is cut off at the periphery of the pin-shaped protrusion (3) stuck therein, thereby failing to be compressed and crimped. When it is too large, by contrast, it becomes meaningless to provide the recess (11). Accordingly, the gap between the outer peripheral surface of the pin-shaped protrusion (3) and the inner surface of the recess (11) is preferably within the range of 0.2 to 10 mm.

As shown in Figs. 4 and 5, a pedestal (first pedestal: 14) having a cross-sectional area greater than the bottom surface area of the first recess (11) and a desired height is formed at a portion where the recess (11) is to be disposed. The pedestal (14) is provided with the recess (11) into which the pin-shaped protrusion (3) is insertable. In this case, as the height of the pedestal (14) is adjusted, the expandability of the porous resin sheet (2) at the portion fixed by the pin-shaped protrusion (3) and that at the other portion can be made different from each other. When the porous resin sheet (2) is compressed such that its porosity in the periphery of the pin-shaped protrusion (3) is lower, the attachment strength (bonding strength) of the porous resin sheet (2) can be enhanced.

In the first mold (10) in this embodiment, as shown in Figs. 4 and 5, the sliding member (second protruded portion: 12) adapted to slide against the outer peripheral surface of the rib-shaped protrusion (6) formed in the resin molded article (1) is disposed at a position opposing the rib-shaped protrusion (6).

The sliding member (12) is formed as a ring-like protrusion in response to the form of the rib-shaped protrusion (6) so as to surround the outer peripheral surface of the latter. The outer peripheral surface of the rib-shaped protrusion (6) and the inner peripheral surface of the sliding member (12) are disposed such that the gap therebetween is nullified, i.e., both surfaces are completely in Contact with each other, in the closing state.

In this embodiment, upon closing of both molds, the outer peripheral surface of the rib-shaped protrusion (6) and the inner peripheral surface of the sliding member (12) respectively become first and second shear surfaces, thereby forming a shear portion, and the porous resin sheet (2) is severed by a shearing force caused by the shearing portion.

Therefore, it is preferable that edge sections of tip portion of the rib-shaped protrusion (6), such as the tip of the outer peripheral surface thereof in particular, and tip portion of the sliding member (12), such as the tip of the inner peripheral surface thereof in particular, be respectively at right angles or acute angles with respect to their height directions. When their tip portions are rounded, it tends to become harder for them to cut off the porous resin sheet (2).

In particular, it is preferable for the edge portion of the sliding member (12) to be always maintained in a sharp state. For this purpose, it is preferably made of a material having a high hardness such as steel material or ceramics.

In such a case where the sliding member (12) in the first mold (10) is made of a material having a very high hardness such as that mentioned above while the material of the rib-shaped protrusion is also relatively hard, the porous resin sheet (2) is relatively easily cut off by the shear portion formed by the outer peripheral surface of the rib-shaped protrusion (6) and the inner peripheral surface of the sliding member (12). Accordingly, the rib-shaped protrusion (6) and the sliding member (12) are disposed such that the gap therebetween is minimized and preferably nullified so as to bring both surfaces completely in contact with each other.

As mentioned above, the sliding member (12) is formed, for example, as a ring-like protrusion in response to the form of the rib-shaped protrusion (6) so as to surround the outer peripheral surface thereof. Its depth from the tip to the bottom portion is not restricted in particular as long as it is such that the cut fraction of the porous resin sheet (2) is not compressed too much at the bottom of the resulting hole. When the mold is processed such that the form of the hole is enlarged from the position deeper than the sliding position with respect to the outer peripheral surface of the rib-shaped protrusion (6) and that the hole communicates with the outside of the mold, however, the cut fraction of the porous resin sheet can easily be removed from the molds to the outside.

In the case where the sliding member (12) is formed as a ring-like protrusion, it may have any width with no restriction as long as the shear portion is formed by the inner peripheral surface of the sliding member (12) and the outer peripheral surface of the rib-shaped protrusion (6), while the sliding member (12) is prevented from bending and breaking at the time when the porous resin sheet (2) is cut off.

In the following, the manufacturing method in accordance with this embodiment using the above-mentioned resin molded article, porous resin sheet, and first and second molds will be explained more specifically.

Figs. 5 to 7 show an embodiment for making a composite article in which the porous resin sheet (2) is laminated on one surface of the resin molded article (1) by means of the first mold (10), in which the circular pedestal (14) is disposed at a position corresponding to the pin-shaped protrusion (3) of the resin molded article (1), while the circular recess (11) is formed in the pedestal (14).

In this embodiment, also achieved is the making of a composite article in which the opening portion (5), whose longitudinal direction becomes in parallel with the opening and closing directions (X) of the molds, is formed in the resin molded article (1), while the opening portion (5) is not covered with the porous resin sheet (2). Namely, Figs. 5 to 7 also show an embodiment for making a composite article in which the porous resin sheet (2) is laminated on a part of a surface of the resin molded article (1) by means of, as one mold, the resin molded article (1) in which the rib-shaped protrusion is unitedly formed along the periphery of the opening portion (5) and, as the other mold, the first mold (10) having the sliding member (12) corresponding to the rib-shaped protrusion (6).

First, as shown in Fig. 5, on the cavity face of the first mold (10) in an open state, the porous resin sheet (2) expanded in the thickness direction of the material sheet due to heating is placed while its heated state is maintained. The resin molded article (1) is disposed thereabove such that the pin-shaped protrusion (3) and the rib-shaped protrusion (6) oppose the porous resin sheet (2).

Here, the material sheet is heated to a temperature not lower than the melting temperature of the thermoplastic resin, which is the matrix resin, but such that the sheet form can be maintained. Though depending on its manufacturing method and material composition, the material sheet can yield the porous resin sheet (2) expanded in the thickness direction on the order of twice to 10 times.

At this stage, it is necessary for the resin molded article (1) and the first mold (10) to be positioned securely such that the positions of the pin-shaped protrusion (3) and rib-shaped protrusion (6) formed in the resin molded article (1) do not deviate from the positions of the recess (11) and sliding member (12) formed in the first mold (10), respectively. Also, the resin molded article (1) is secured to the second mold (20), which is attached to the press unit (30), movable in the opening and closing directions (X), in order for the resin molded article (1) and the first mold (10) to come close to each other such that, without positional deviation, the pin-shaped protrusion (3) sticks into a predetermined position of the porous resin sheet (2) while the outer peripheral surface of the rib-shaped protrusion (6) and the inner peripheral surface of the sliding member (12) slide against each other, thereby forming a shear surface by which the porous resin sheet (2) can be cut off.

After the porous resin sheet (2), which is in a softened state due to heating, is supplied, as shown in Fig. 6, the first mold (10) and the second mold (20) are closed as fast as possible in order to minimize the drop in temperature of the sheet. Consequently, the resin molded article (1) is pressed against the porous resin sheet (2), which is in a softened state due to heating, the pin-shaped protrusion (3) is stuck into the porous resin sheet (2), and the porous resin sheet (2) is molded. Also, the outer peripheral surface of the rib-shaped protrusion (6) in the resin molded article (1) and the inner peripheral surface of the sliding member (12) in the first mold (1) rub against each other. At this moment, a part of the porous resin sheet (2a) is cut off by a joint portion of the outer peripheral surface (first shear surface) of the rib-shaped protrusion (6) and the inner peripheral surface (second shear surface) of the sliding member (12). Then, while this closed state is maintained, the porous resin sheet (2) is cooled so as to solidify the matrix resin.

Though the pressing force (compressive force) at this stage varies depending on the porosity of the porous resin sheet in the desired composite article, whether or not a hollow portion is formed between the resin molded article (1) and the porous resin sheet (2), their gap, and the like, it can be of any magnitude as long as the pin-shaped protrusion (3) sticks into the porous resin sheet (2) while at least the porous resin sheet (2) is cut off. Preferably, a part or the whole of the porous resin sheet (2) is in close contact and firmly joined with the resin molded article (1).

Thereafter, the first mold (10) and the second mold (20) are opened, and the resulting composite article is removed therefrom. In thus obtained composite article, as shown in Fig. 7, since the pin-shaped protrusion (3) has been stuck into the porous resin sheet (2), the outer peripheral surface of the pin-shaped protrusion (3) is crimped with the porous resin sheet (2) clinging thereto in its surrounding area. Further, the porous resin sheet (2) is compressed in the gap between the recess (11) and the pin-shaped protrusion (3), whereby its crimping action is enhanced. Also, depending on conditions such as the material resin of the pin-shaped protrusion (3) and the heating temperature of the porous resin sheet (2), the resin in the surface portion of the pin-shaped protrusion (3) and the matrix resin of the porous resin sheet (2) fuse together, thereby forming a composite article in which the porous resin sheet (2) is laminated on (attached to) the resin molded article (1) by way of the pin-shaped protrusion (3). Accordingly, also obtained is a composite article in which the part of the porous resin sheet (2a) at the opening portion (5) of the resin molded article (1) is cut off, whereby the resin molded article (1) is exposed at the opening portion (5).

Also, in such a method, in the case where the cavity face of the first mold (10) is processed into a desired form, the porous resin sheet (2) can be provided with the desired form at the same time when the porous resin sheet (2) is laminated on the resin molded article (1) by way of the pin-shaped protrusion (3).

Here, in the case where the clearance between the cavity face (8) of the resin molded article (1) and the cavity face (13) of the first mold (1) is made smaller than the thickness of the supplied porous resin sheet (2), which is in a softened state due to heating, a composite article in which the resin molded article (1) and the porous resin sheet (2) are in close contact with each other is obtained. In the case where the clearance between the cavity face (8) of the resin molded article (1) and the cavity face (13) of the first mold (1) is made greater than the thickness of the supplied porous resin sheet (2), which is in a softened state due to heating, an air layer (hollow portion) can be formed between the resin molded article (1) and the porous resin sheet (2).

In the case where this clearance is partially changed or irregularities are formed in the resin molded article (1) or the cavity face (13) of the first mold (10), the thickness of the porous sheet can be changed or the air layer can be formed locally.

In the case where the overall pressing force for the porous resin sheet (2) is to be weakened so as to keep the porosity of the porous resin sheet (2) high or form a hollow portion between the resin molded article (1) and the porous resin sheet (2) without exerting a compressive force on the main part of the porous resin sheet (2), the height of the protrusion of the sliding member (12) may be increased, for example, so as to compress the residual porous resin sheet (2) surrounding the outer peripheral surface of the rib-shaped protrusion (6) against the resin molded article (1) by the tip portion of the sliding member (12), thereby firmly joining the porous resin sheet (2) and the resin molded article (1) together at this portion. Also, in such a case where the resin molded article (1) is formed like a box, the clearance of a gap formed by the inner surface of a side wall of an end portion of the resin molded article (1) and the outer peripheral surface of the first mold (10) may be made smaller than the thickness of the supplied porous resin sheet (2), such that the porous resin sheet is held and compressed by this clearance portion so as to join with the inner surface of the side wall of the resin molded article (1).

The method of this embodiment may continuously be performed in conjunction with making of a resin molded article which becomes a base material. In this case, for example, a conventional pair of male and female molds are used for molding a desired resin molded article having a pin-shaped protrusion by means of compression molding, injection compression molding, and the like. Then, while thus obtained resin molded article is held at one mold face, the other mold is inserted therein as the above-mentioned first mold. Subsequently, the lamination of a porous resin sheet onto the resin molded article and the provision of a desired form can be effected simultaneously by the method similar to that mentioned above.

Though one preferred embodiment of the method of making a composite article in accordance with the present invention is explained in the foregoing, the present invention should not be restricted thereto.

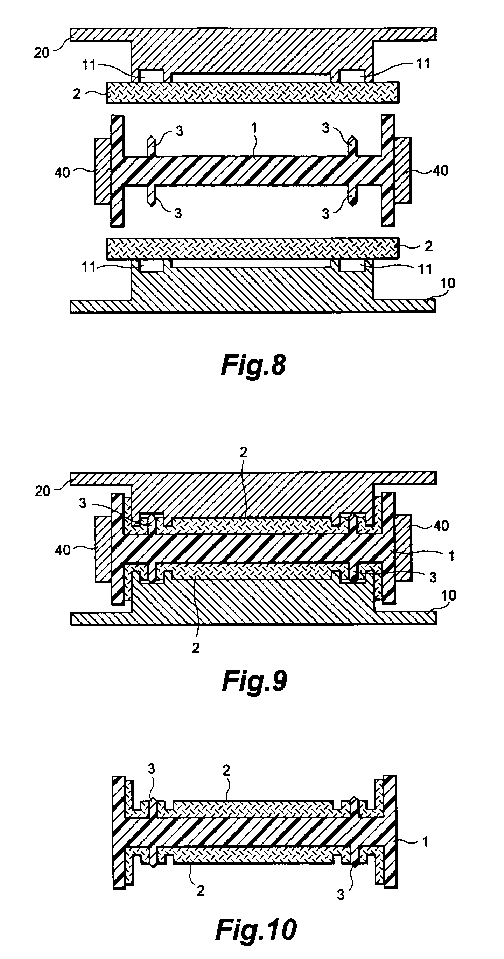

For example, though the porous resin sheet is laminated on only one surface of the resin molded article in the above-mentioned embodiment, the porous resin sheets (2) may be laminated on both surfaces of the resin molded article (1) as shown in Figs. 8 to 10. In this case, the pin-shaped protrusion (3) is formed at each of the both surfaces of the resin molded article (1), whereas not only the first mold (10) but also the second mold (20) is provided with the recess (11) adapted to receive the tip portion of the pin-shaped protrusion (3) at the time of closing.

Also, as shown in Fig. 8, the resin molded article (1) held by a holding tool (40) is disposed between the first mold (10) and the second mold (20), which are in an open state, whereas the porous resin sheets (2), which are in a softened state due to heating, are disposed on both sides thereof. Thereafter, as shown in Fig. 9, the first mold (10) and the second mold (20) are closed, whereby each porous resin sheet (2) is stuck with its corresponding pin-shaped protrusion (3) and molded into a desired form. Consequently, as shown in Fig. 10, obtained is a composite article in which the porous resin sheets (2) are laminated on (attached to) both surfaces of the resin molded article (1) by way of the pin-shaped protrusions (3).

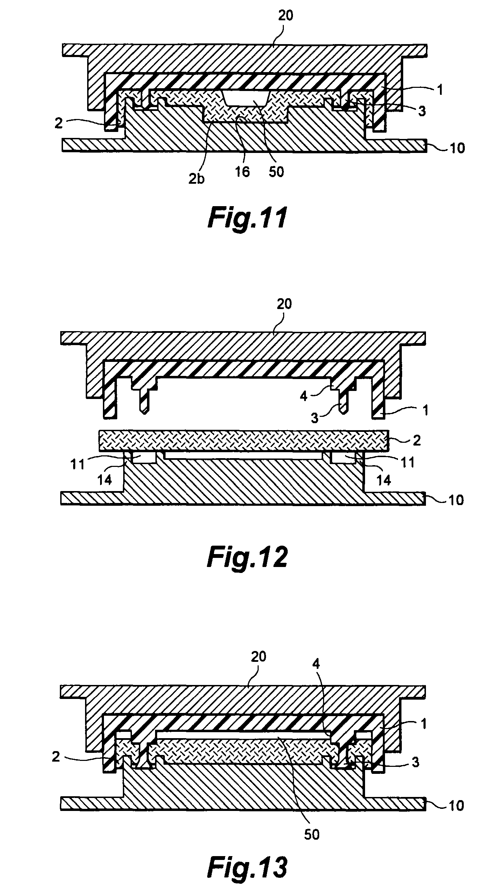

As shown in Fig. 11, the cavity face of the first mold (10) may be provided with a recess (second recess: 16), having an appropriate depth, for receiving a porous resin sheet at a portion which is positioned so as not to be in contact with the pin-shaped protrusion and where a hollow portion (50) is to be formed. In this case, when the porous resin sheet (2), which is in a softened state due to heating, is placed on the first mold (10), a part of the porous resin sheet (2b) positioned at the recess (16) enters therein due to its own weight, whereby a space (50) is formed between its upper face and the lower face of the resin molded article (1). Then, in a manner similar to that mentioned above, the portion of the resin molded article (1) at the pin-shaped protrusion (3) is fixed to the porous resin sheet (2) by crimping, whereby a composite article having the hollow portion (50) at a desired part can be obtained. In this case, in order to more securely insert the porous resin sheet (2) into the recess (16), a continuous or discontinuous rib-shaped protrusion may be formed in the resin molded article (1) at a position corresponding to the recess (16), so that the porous resin sheet (2b) is pushed into the recess (16) by the rib-shaped protrusion.

As shown in Figs. 12 and 13, a pedestal (second pedestal: 4) having a cross-sectional area greater than the cross-sectional area of the base portion of each pin-shaped protrusion (3) to be disposed and a desired height may be formed in the resin molded article (1) at a position where the pin-shaped protrusion (3) is disposed, so that the pin-shaped protrusion (3) is mounted on the pedestal (4) in a step form. In such a case, as the height of the pedestal (4) is adjusted, the expandability of the porous resin sheet (2) at the portion fixed by the pin-shaped protrusion (3) and that at the other portion can be made different from each other. When the porous resin sheet (2) is compressed such that its porosity in the periphery of the pin-shaped protrusion (3) is lower, the attachment strength of the porous resin sheet (2) can be enhanced. Also, in this case, as shown in Fig. 13, the hollow portion (50) can be formed between the resin molded article (1) and the porous resin sheet (2) in the area excluding the pin-shaped protrusions (3). Here, the pedestal (4) may be disposed at the lower portion of the pin-shaped protrusion (3) in the resin molded article (1), while the pedestal (14) may be disposed in the first mold (10) at a position where the recess (11) is formed, and they may be used in combination.

Though the depth of the recess (11) formed in the first mold (10) is such that the tip portion of the pin-shaped protrusion (3) does not reach its bottom portion in the above-mentioned embodiment, the depth of the recess (11) may be somewhat reduced as shown in Fig. 13 such that the tip portion of the pin-shaped protrusion (3) is crushed with the bottom surface of the recess (11). When the tip portion of the stuck pin-shaped protrusion (3) is thus crushed so as to attain a flat state, the bonding strength between the pin-shaped protrusion (3) and the porous resin sheet (2) is further enhanced.

The bottom surface of the recess (11) may be either flat or, in the case where the tip portion of the pin-shaped protrusion (3) is to be crushed, conically or semicircularly convex, such that the tip portion of the crushed pin-shaped protrusion (3) is spread around it.

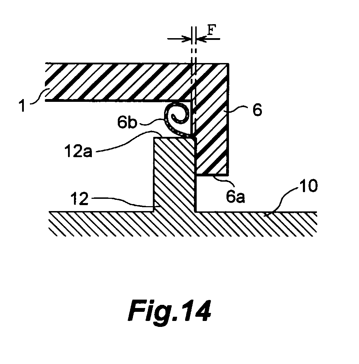

Though the above-mentioned embodiment explains the case where the gap between the outer peripheral surface of the rib-shaped protrusion (6) and the inner peripheral surface of the sliding member (12) is nullified, the inner peripheral form of the sliding member (12) may be made smaller than the outer peripheral form of the rib-shaped protrusion (6) as shown in Fig. 14. Namely, when both of the outer peripheral form of the rib-shaped protrusion (6) and the inner peripheral form of the sliding member (12) are circular, for example, the inner peripheral diameter of the sliding member (12) may be made smaller than the outer peripheral diameter of the rib-shaped protrusion (6), such that an end face (6a) of the rib-shaped protrusion (6) and an end face (12a) of the sliding member (12) partially overlap each other. In particular, when the material of the rib-shaped protrusion (6) has a low compressive strength so as to be easily deformed, it is preferred that end face (6a) of the rib-shaped protrusion (6) and the end face (12a) of the sliding member (12) be disposed so as to partially overlap each other. In this case, as both molds are being closed, the porous resin sheet (2) is cut off while an overlapping portion (6b) of the rib-shaped protrusion (6) is shaved with the inner peripheral surface of the sliding member (12). Here, though variable depending on the material characteristics and thickness values of the rib-shaped protrusion (6) and sliding member (12), their overlapping width (F) is normally 5 mm or less.

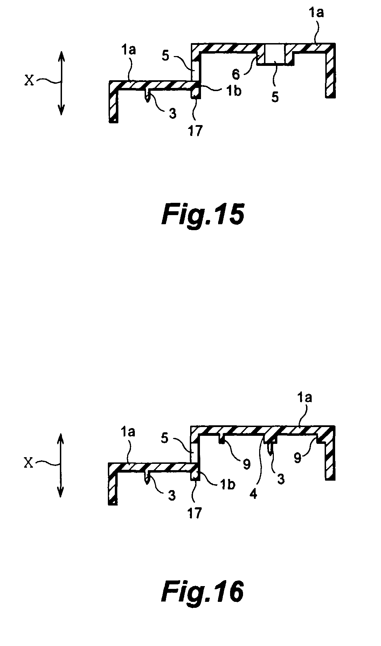

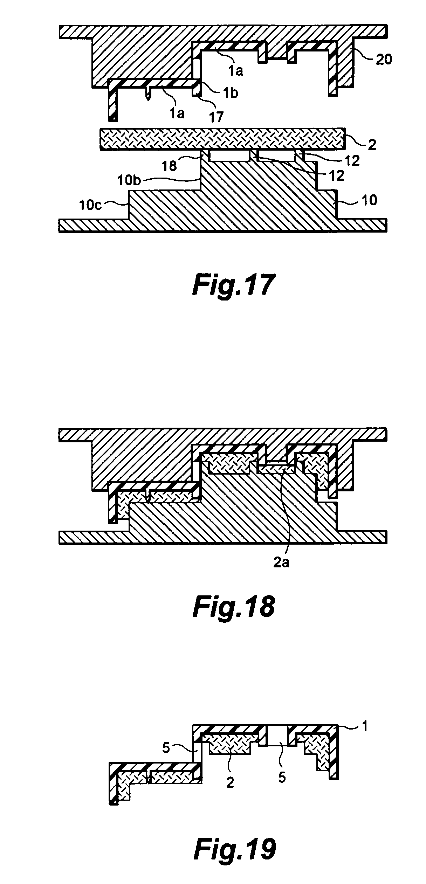

Further, though the main part of the resin molded article is planar in the above-mentioned embodiment, it may be formed like a step as shown in Figs. 15 and 16. The above-mentioned embodiment relates to the case for making a composite article in which the resin molded article (1) is provided with the opening portion (5) whose longitudinal direction is in parallel with the opening and closing directions (X) of molds, while the opening portion (5) is not covered with the porous resin sheet (2). Nevertheless, composite articles such as those shown in Figs. 17 to 22, in which the main part is formed like a step, and the porous resin sheet (2) is laminated on a horizontal portion (1a) of the step part, whereas the laminated resin sheet (2) is removed from its vertical wall portion (1b), can be made basically in the same manner as that mentioned above.

In this case, the vertical wall portion (1b) of the resin molded article, serving as the base material, corresponds to the rib-shaped protrusion mentioned above, whereas a vertical wall portion (10b) of the first mold matching the vertical wall portion (1b) corresponds to the sliding member.

Accordingly, also in this case, the clearance between the vertical wall portion (1b) of the resin molded article and the vertical wall portion (10b) of the first mold is made as small as possible and preferably nullified. Alternatively, depending on the resin molded article (1), the vertical wall portion (1b) of the resin molded article (1b) may partially overlap the vertical wall portion (10b) of the first mold, such that a surface of the vertical wall portion (1b) of the resin molded article (1b) is shaved with the vertical wall portion (10b) of the first mold at the time when the molds are closed. Consequently, the porous resin sheet (2) is cut off.

Here, the vertical wall portion (1b) of the resin molded article may not only be disposed within the resin molded article (1) but also constitute the outermost wall of the resin molded article (1). In this case, an outer peripheral portion (10c) of the first mold corresponds to the vertical wall portion (10b) of the first mold.

In this method, in order to improve the severability of the porous resin sheet (2) or the bonding of the porous resin sheet (2) to the resin molded article (1) in the horizontal portion (1a) continuous with the vertical wall portion (1b), a continuous rib-shaped or discontinuous pin-shaped protrusion (17) may be disposed at the lower part of the vertical wall portion (1b) in the opening and closing directions of molds, so that the contact with the vertical wall portion (10b) of the first mold is enhanced by means of the protrusion (17), or so that the porous resin sheet (2) is stuck or compressed with the tip portion of the protrusion (17), whereby the porous resin sheet (2) and the resin molded article (1) can be joined together more firmly.

Similarly, a continuous rib-shaped or discontinuous pin-shaped protrusion (18) may be disposed at an end part of the vertical wall portion (10b) of the first mold, so that the porous resin sheet (2) is compressed against the resin molded article (1) at the tip portion of the protrusion (18) more strongly than in the other positions, whereby they can be joined together more firmly. Of course, either one or both of the protrusions (17, 18) may be provided.

The thickness and height of such protrusions (17, 18) are similar to those of the above-mentioned rib-shaped protrusion (6) and sliding member (12). In the case where the protrusion (17) is disposed at the lower part of the vertical wall portion (1b) of the resin molded article, the thickness of the protrusion (17) is usually the same as that of the vertical wall portion (1b), and the protrusion (17) is formed as an extension of the vertical wall portion (1b). In this case, the vertical wall portion (1b) of the resin molded article may be provided with the opening portion (5).

In the case of the resin molded article (1) having the vertical wall portion (1b) whose surface is in parallel with the opening and closing directions (X) of molds, such as that shown in Figs. 15 and 16, when the form of the vertical wall portion (10b) of the first mold sliding against the vertical wall portion (1b) is adjusted, the form of a cut-off portion of the porous resin sheet (2) at the vertical wall portion (1b) of the resin molded article can be adjusted. In the case where the porous resin sheet (2) is thus cut off by the vertical wall portion (1b) of the resin molded article, it is unnecessary for the vertical wall portion (1b) of the resin molded article to be provided with the rib-shaped protrusion.

Also, without a ring-like protrusion being formed as the sliding member (12), the first mold (10) may be provided with a recess having an inner peripheral surface corresponding to the inner peripheral surface of the sliding member. In this case, the ejecting length of the rib-shaped protrusion (6) is appropriately adjusted in comparison with the case where the ring-like protrusion is formed.

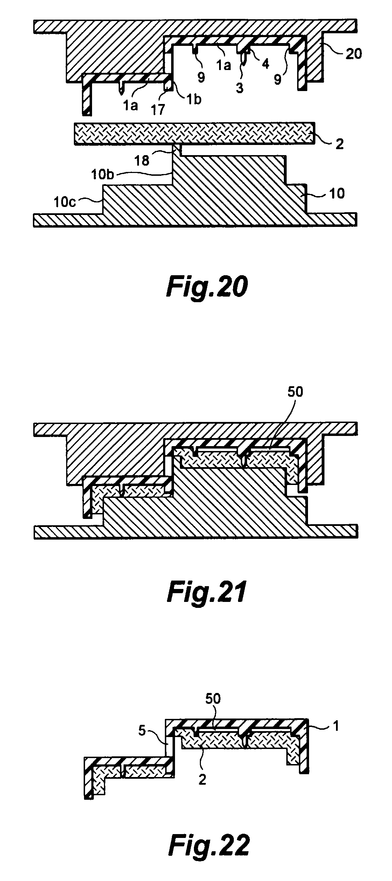

As shown in Figs. 20 to 22, when the hollow portion (50) is provided, in keeping the gap between the surface of the porous resin sheet (2) and surface of the resin molded article (1) on the hollow portion side, it is effective to provide the resin molded article (1) with a gap-holding member (9) whose tip portion coming into contact with the porous resin sheet (2) is formed like a relatively flat protrusion. In this case, the gap-holding member (9) may be either a continuous plate-like projection or a circular or angular pedestal.

The pedestal (4) may be disposed between the pin-shaped protrusion (3) and the resin molded article (1) so as to become a pin-shaped protrusion with a pedestal, and its part extending from the tip portion of the pin-shaped protrusion (3) to the pedestal (4) may stick into the porous resin sheet (2) so as to enhance the bonding to the porous resin sheet (2), while causing the part of the pedestal (4) to function as the gap-holding member.

Though the pin-shaped protrusion (3) used in the above-mentioned embodiment is columnar, without being restricted thereto, the form of the pin-shaped protrusion (3) in accordance with the present invention may have any pillar form whose cross-section is triangular, quadrilateral, hexagonal, semicircular, circular, or the like.

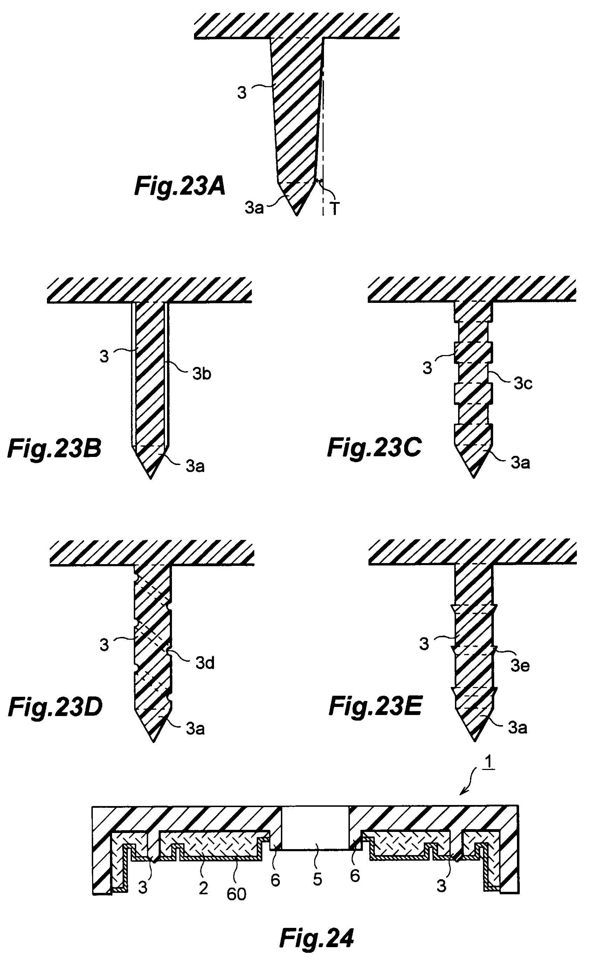

In the case where the pin-shaped protrusion (3) has a pillar form such as a column, its base portion attached to the resin molded article (1) and the tip portion may have substantially the same size or, as shown in Fig. 23A, it may have a conical form in which the size becomes smaller toward the tip portion. In the case where it is a complete conical form or a tapered form, though in a truncated conical form, having an extremely large difference in the sizes of its upper and lower ends, however, the bonding between the pin-shaped protrusion (3) and the porous resin sheet (2) tends to become easily lower. Accordingly, it is preferably in a pillar form in which the upper and lower ends have substantially the same size or the diameter of the tip portion is slightly smaller (with a cone angle T of 3° or less). Even in this case, in making the pin-shaped protrusion (3) easily stick into the porous resin sheet (2), it is very effective for the foremost tip portion (3a) to be in a sharp state such as a conical form.

Also, in the outer peripheral portion of the pin-shaped protrusion (3), in order to prevent the porous resin sheet (2) from dropping out of the pin-shaped protrusion (3) after being completely stuck therewith, so as to be more firmly secured to the latter, a vertical groove (3b) such as that shown in Fig. 23B, a horizontal groove (3c) such as that shown in Fig. 23C, a spiral groove (3d) such as that shown in Fig. 23D, or a protrusion (3e) such as that shown in Fig. 23E may be provided as long as it does not obstruct the sticking action.

The porous fiber-reinforced thermoplastic resin sheet (2) in accordance with the present invention may be used in the present invention either as it is or with a thermoplastic resin film attached to, preferably one of, its surfaces. In this case, as shown in Fig. 24, when used as a composite article, a thermoplastic resin film (60) prevents oil or water from being absorbed into the porous resin sheet so as to keep such characteristics as soundproof and heat insulation from deteriorating. Also, when used as a sound-absorbing material, it is highly effective in improving the sound-absorbing characteristic for low frequency sounds.

Though the material of the thermoplastic resin film (60) used for such a purpose is preferably a resin having a structure identical or analogous to the matrix resin of the porous resin sheet (2) in view of the bonding to the porous resin sheet (2), it may be made of any of other resin materials, as long as they have favorable bonding characteristics, or a multilayer film in which these materials are laminated.

The thickness of the thermoplastic resin film (60) may be such that the effects mentioned above can be obtained and is usually within the range on the order of 20 to 100 µm. The porous resin sheet (2) having the thermoplastic resin film (60) attached to one surface thereof is usually used such that its side without the film (60) faces the resin molded article (1).

Also, in the case where the porous resin sheet (2) is laminated on only one surface of the porous resin sheet (2) or partially, a skin material or decorating resin sheet for decoration may be attached to the surface of the resin molded article (1) on which the porous resin sheet (2) is not laminated.

### Examples

In the following, the present invention will be explained in further detail with reference to examples, which by no means restrict the present invention.

### Example 1

A glass-fiber-reinforced polypropylene resin (GHH43, manufactured by Sumitomo Chemical Co., Ltd.) was used to yield, by means of injection molding, the fiber-reinforced resin molded article (1) shaped like a rectangular box having such a cross-sectional form as that shown in Fig. 1 with a thickness of 3 mm at its planar portion. Slightly on the inside of both ends of the inner top board portion of the resin molded article (1), disposed were four pieces of pin-shaped protrusions (3) each having a diameter of 4 mm and a length of 12 mm with its tip portion having a conical form with a height of 3 mm.

Also, the planar portion of the resin molded article (1), as Fig. 1 shows its cross section, was provided with the circular opening portion (5) having a diameter of 80 mm and the ring-like rib-shaped protrusion (6), having a thickness of 4 mm and a height of 8 mm (with an outer peripheral diameter of 88 mm), disposed along the periphery of the opening portion.

This resin molded article (1) was held with the second mold (20), such as that shown in Fig. 4, having the protrusion (22) adapted to closely mate with the opening portion (5) of the resin molded article (1), so as to form a mold.

The first mold (10) opposing thus formed mold was provided with a circular pedestal having a diameter of 10 mm and a height of 5 mm at a position corresponding to each pin-shaped protrusion (3), and the center of the pedestal was bored with a hole having an inner diameter of 6 mm and a depth of 10 mm so as to form the recess (11). Also, formed at a position corresponding to the ring-like rib-shaped protrusion (6) of the resin molded article was the sliding member (12) made of steel, which was a ring-like protrusion, surrounding the outer peripheral surface of the rib-shaped protrusion, with a thickness of 2 mm, an inner diameter of 86 mm, and a height of 8 mm from the cavity face.

A fiber-reinforced thermoplastic resin sheet made by a filtering method (manufactured by K-plasheet Corporation, with a matrix resin of polypropylene, a reinforcement fiber of glass fiber, a glass fiber content of 62% by weight, and a thickness of 1.8 mm) having a weight per area of 2,000 g/m², with a nylon film attached to one surface thereof, was heated by an infrared heater till its surface temperature became 210°C. Thus softened porous resin sheet (2), which had been expanded to a thickness of about 12 mm, was placed between the resin molded article (1) and the first mold (10), which were in an open state, such that the nylon film side faced the cavity face of the first mold (10; Fig. 5).

Immediately thereafter, the second mold (20) was moved down so that the resin molded article (1) and the porous resin sheet (2) came close to each other till the clearance between the surface of the resin molded article on the pin-shaped protrusion side and the center portion of the cavity face of the first mold became 10 mm. During this operation, the outer peripheral surface of the rib-shaped protrusion (6) was shaved with the inner periphery of the ring-like rib-shaped protrusion (12) of the first mold, so that the porous resin sheet (2) in the opening portion held therebetween was cut off, and the porous resin sheet (2) was stuck with the pin-shaped protrusion (3) at the same time (Fig. 6). Here, the shear clearance formed between the inner surface of the vertical wall (side wall) of the resin molded article and the outer peripheral surface of the first mold was set to 5 mm.

While this state was maintained, the porous resin sheet (2) was cooled, and then the second mold (20) was moved up, whereby a composite article was obtained (Fig. 7).

In thus obtained composite article, the porous resin sheet (2) was clinging to the outer peripheral surface of the pin-shaped protrusion (3), whereby the resin molded article (1) and the porous resin sheet (2) were securely united together by way of the pin-shaped protrusion (3). The thickness of the porous resin sheet (2) in thus obtained composite article was 10 mm, the opening portion of the resin molded article was completely through as the porous resin sheet (2) had been cut off, and the porous resin sheet (2) was also bonded to the resin molded article (1).

### Example 2

The same glass-fiber-reinforced polypropylene resin as that employed in Example 1 (GHH43, manufactured by Sumitomo Chemical Co., Ltd.) was used to yield, by means of injection molding, a fiber-reinforced resin molded article shaped like a rectangular box having such a cross-sectional form as that shown in Fig. 12 with a thickness of 3 mm at its planar portion. Slightly on the inside of both ends of the inner top board portion of this resin molded article (1), disposed were the circular pedestals (4) each having a diameter of 6.5 mm and a length of 12 mm, whereas four pieces of pin-shaped protrusions (3) each having a diameter of 4 mm and a length of 10 mm with its tip portion having a conical form with a height of 3 mm were respectively formed at their center portions.

This resin molded article (1) was inserted into and fixed to the second mold (20), which was vertically movable.

On the other hand, the first mold (10) corresponding thereto was provided with the circular pedestal (14) having a diameter of 10 mm and a height of 5 mm at a position corresponding to each pin-shaped protrusion, and the center of the pedestal was bored with a hole having an inner diameter of 6 mm and a depth of 7 mm so as to form the recess (11).

A fiber-reinforced thermoplastic resin sheet made by a filtering method similar to that used in Example 1 was heated by an infrared heater till its surface temperature became 210°C. Thus softened porous resin sheet (2), which had been expanded to a thickness of about 12 mm, was placed between the resin molded article (1) and the first mold (10), which were in an open state, such that the nylon film side faced the cavity face of the first mold (10; Fig. 12).

Immediately thereafter, the second mold (20) was moved down so that the resin molded article (1) and the porous resin sheet (2) came close to each other till the clearance between the surface of the resin molded article on the pin-shaped protrusion side and the center portion of the cavity face of the mold became 20 mm, whereby the porous resin sheet (2) was stuck with the pin-shaped protrusion (3), and the tip portion of the latter was crushed within the recess (Fig. 13).

While this state was maintained, the porous resin sheet (2) was cooled, and then the second mold (20) was moved up, whereby a composite article was obtained.

In thus obtained composite article, the porous resin sheet (2) was clinging to the outer peripheral surface of the pin-shaped protrusion (3), and the tip portion of the latter was crushed, whereby the resin molded article (1) and the porous resin sheet (2) were securely united together by way of the pin-shaped protrusion (3).

### Example 3

The same glass-fiber-reinforced propylene resin as that employed in Example 1 (GHH43, manufactured by Sumitomo Chemical Co., Ltd.) was used to yield a fiber-reinforced resin molded article shaped like a stepped rectangular box having a thickness of 3 mm. This resin molded article (1), as Fig. 15 shows its cross section, was in a two-step structure having a distance of 18 mm between the respective outer surfaces of the upper and lower planar portions. The upper planar portion was provided with the circular opening portion (5) having a diameter of 80 mm and the ring-like rib-shaped protrusion (6; with an outer peripheral diameter of 88 mm) having a thickness of 4 mm and a height of 8 mm formed along the periphery of the opening portion; whereas the lower planar portion was provided with one piece of pin-shaped protrusion (3) having a diameter of 6 mm and a length of 10 mm with a conical tip. The vertical wall surface between the upper and lower planar portions was bored with the rectangular opening (5) having a width of 10 mm and a length of 50 mm separated from the upper end of the vertical wall by 10 mm, whereas the vertical wall is provided with the plate-like continuous protrusion (17), as an extension of the vertical wall, having a width identical to the thickness of the molded article and a height of 8 mm.

In the first mold (10) opposing thus formed mold, the cavity face was in a two-step structure corresponding to the resin molded article. Formed in the upper cavity face at a position corresponding to the ring-like rib-shaped protrusion (6) of the resin molded article was the sliding member (12) made of steel, which was a ring-like protrusion, surrounding the outer peripheral surface of the rib-shaped protrusion, with a thickness of 2 mm, an inner diameter of 86 mm, and a height of 8 mm from the cavity face. Formed along the upper end periphery of the vertical wall portion of the first mold was the plate-like protrusion (18) made of steel extending upward with a thickness of 2 mm and a height of 8 mm. The outer peripheral surface of the protrusion was adapted to come into close contact with the inner face of the vertical wall portion of the resin molded article at the time of the molding operation by means of the molds.

A fiber-reinforced thermoplastic resin sheet made by a filtering method similar to that used in Example 1, having a weight per area of 2,000 g/m² with one surface attached to a nylon film, was heated by an infrared heater till its surface temperature became 210°C. Thus softened porous sheet (2), which had been expanded to a thickness of about 12 mm, was placed between the resin molded article (1) and the first mold (10), which were in an open state, such that the nylon film side faced the cavity face of the first mold (10; Fig. 17).

Immediately thereafter, the molded article (1) held with the second mold (20) was moved down so that the resin molded article (1) and the porous sheet (2) came close to each other till each of the clearances between the upper planar portion of the resin molded article and the upper cavity face of the first mold and between the lower planar portion of the resin molded article and the lower cavity face of the first mold became 10 mm. During this operation, in the upper surface portion of the resin molded article, the outer peripheral surface of the rib-shaped protrusion (6) was shaved with the inner periphery of the ring-like rib-shaped protrusion (12), so that the porous sheet (2) in the opening portion held therebetween was cut off. In the lower surface portion of the resin molded article, the porous sheet (2) was stuck with the pin-shaped protrusion (3), and the conical portion at the tip of the latter was crushed so as to be buried in the porous sheet (2). In the vertical wall portion of the resin molded article, the plate-like protruded portion (18) formed in the first mold closely slid against the protrusion (17) in the lower part of the vertical wall portion, thereby cutting off the porous sheet (2) in the corresponding portion (Fig. 18).

Here, the shear clearance formed between the inner surface of the outermost vertical wall of the resin molded article and the outer peripheral surface of the first mold was set to 5 mm.

While this state was maintained, the porous sheet (2) was cooled, and then the second mold (20) was moved up, whereby a composite article was obtained (Fig. 19).

The thickness of the porous sheet (2) in thus obtained composite article was 10 mm, the opening portion formed in the upper planar portion of the resin molded article (1) was completely through as the porous sheet (2) had been cut off, and the porous sheet (2) was not bonded to the center vertical wall portion, whereby its opening portion (5) was through as well.

### Example 4

The same glass-fiber-reinforced propylene resin as that employed in Example 1 (GHH43, manufactured by Sumitomo Chemical Co., Ltd.) was used to yield a fiber-reinforced resin molded article shaped like a stepped rectangular box having a thickness of 3 mm.

This resin molded article (1), as Fig. 16 shows its cross section, was in a two-step structure with a distance of 23 mm between the respective outer surfaces of the upper and lower planar portions. The upper planar portion was provided with the circular pedestal (4) having a diameter of 30 mm and a height of 10 mm and the pin-shaped protrusion disposed at the center thereof with a diameter of 6 mm and a height of 10 mm including a conical tip. Disposed between the pedestal and the center vertical wall portion was the plate-like gap-holding member (9) having a thickness of 2 mm and a height of 10 mm. The lower planar portion was provided with one piece of the pin-shaped protrusion having a diameter of 6 mm and a height of 10 mm with a conical tip. The vertical wall face between the upper and lower surfaces was provided with the rectangular opening (5) having a width of 10 mm and a length of 50 mm separated from the upper end of the vertical wall by 10 mm. Formed on the vertical wall as an extension thereof was the plate-like continuous protrusion (17) having a width identical to the thickness of the molded article and a height of 8 mm.

In the first mold (10) opposing thus formed mold, the cavity face was in a two-step structure corresponding to the resin molded article (1). Formed along the upper end periphery of the vertical wall portion of the first mold was the plate-like protrusion (18) made of steel extending upward with a thickness of 3 mm and a height of 13 mm. The outer peripheral surface of the protrusion was adapted to come into close contact with the inner face of the vertical wall portion of the resin molded article at the time of the molding operation by means of the molds.

Here, the first mold (1) had been designed such that cavity clearances between the two planar portions of the resin molded article and their corresponding two cavity faces of the first mold (10) at the time when molding was completed were different from each other.

The same fiber-reinforced thermoplastic resin sheet made by a filtering method as that used in Example 1, having a weight per area of 2,000 g/m² with one surface attached to a nylon film, was heated by an infrared heater till its surface temperature became 210°C. Thus softened porous sheet (2), which had been expanded to a thickness of about 12 mm, was placed between the resin molded article (1) and the first mold (10), which were in an open state, such that the nylon film side faced the cavity face of the first mold (10; Fig. 20).

Immediately thereafter, the molded article (1) held with the second mold (20) was moved down so that the resin molded article (1) and the porous sheet (2) came close to each other till the clearance between the upper planar portion of the resin molded article and its corresponding cavity face of the first mold became 20 mm and the cavity clearance between the lower planar portion of the resin molded article and its corresponding cavity face of the first mold became 10 mm. During this operation, in the upper surface portion of the resin molded article (1), the porous sheet (2) having a thickness of about 10 mm kept a gap of about 10 mm by means of the gap-holding member (9) and the pedestal (4) of the pin-shaped protrusion so as to form the hollow portion (50). Also, in the lower surface portion of the resin molded article (1), the porous sheet (2) was compressed to a thickness of 10 mm so as to come into close contact with the resin molded article (1), the porous sheet (2) was stuck with the pin-shaped protrusion (3), and the conical portion at the tip of the latter was crushed so as to be buried in the porous sheet (2). Further, in the vertical wall portion of the resin molded article (1), the plate-like protruded portion (18) formed in the first mold (10) closely slid against the protrusion (17) in the lower part of the vertical wall portion, thereby cutting off the porous sheet (2) in the corresponding portion (Fig. 21).

Here, the shear clearance formed between the inner surface of the outermost vertical wall of the resin molded article and the outer peripheral surface of the first mold was set to 5 mm.

While this state was maintained, the porous resin sheet (2) was cooled, and then the second mold (20) was moved up, whereby a composite article was obtained (Fig. 22).

In thus obtained composite article, one surface was bonded to the porous sheet (2) having a thickness of about 10 mm by way of the hollow portion (50) having a gap of about 10 mm, whereas the other surface was in close contact with the surface of the resin molded article (1) so as to be bonded to the porous sheet (2) having a thickness of 10 mm. The porous sheet (2) was not bonded to the center vertical wall portion parting these surfaces, whereby its opening portion (5) was through as well.

### Industrial Applicability

In accordance with the method of the present invention, the outer peripheral surface of the pin-shaped protrusion disposed in the resin molded article is crimped and firmly united with the porous resin sheet stuck therewith. Accordingly, at the time of use, reinforcement fibers from the porous resin sheet are prevented from becoming loose, the hole around the pin does not increase its size, and the bonding force is not lowered over time. Also, in a very small number of steps, without any use of adhesives, a composite article in which the porous resin sheet is laminated on the resin molded article can easily be manufactured.

## Claims

1. A method of making a composite article in which a resin molded article and a porous fiber-reinforced thermoplastic resin sheet are laminated together, said method including the steps of:
placing, between first and second molds which are in an open state, a resin molded article having at least one pin-shaped protrusion made of a thermoplastic resin on a surface thereof and a first porous fiber-reinforced thermoplastic resin sheet which is in a softened state due to heating;
closing said first and second molds, so as to stick said resin sheet with said pin-shaped protrusion and mold said resin sheet into a desired form;
solidifying said resin sheet by cooling while maintaining said first and second molds in a closed state; and
removing said composite article by opening said first and second molds.

2. A method according to claim 1, wherein said first porous fiber-reinforced thermoplastic resin sheet is placed between said resin molded article and said first mold.

3. A method according to claim 2, wherein said resin molded article has at least one piece of the pin-shaped protrusion made of a thermoplastic resin on each of both surfaces thereof;
said method further comprising the step of placing, between said resin molded article and said second mold, a second porous fiber-reinforced thermoplastic resin sheet which is in a softened state due to heating.

4. A method according to claim 1, wherein a portion of said molds opposing said pin-shaped protrusion is provided with a first recess into which at least a tip portion of said pin-shaped protrusion is insertable when the molds are brought into a closed state.

5. A method according to claim 4, wherein, in the closed state, an outer peripheral surface of said pin-shaped protrusion and an inner wall surface of said first recess has a gap within the range of 0.2 to 10 mm therebetween.

6. A method according to claim 4, wherein said first recess is disposed on a first pedestal which is formed at the portion of said molds opposing said pin-shaped protrusion, said first pedestal having a cross-sectional area larger than a bottom surface area of said first recess and a desired height.

7. A method according to claim 1, wherein, in the step of closing said first and second molds, said pin-shaped protrusion is stuck into said resin sheet so as to penetrate therethrough.

8. A method according to claim 1, wherein, in the step of closing said first and second molds, said pin-shaped protrusion is stuck into said resin sheet so as to penetrate therethrough, while a tip portion of said pin-shaped protrusion is crushed.

9. A method according to claim 1, wherein said pin-shaped protrusion has a length equal to or greater than a thickness of said resin sheet before molding.

10. A method according to claim 1, wherein, in the step of closing said first and second molds, said pin-shaped protrusion is stuck into said resin sheet such that a hollow portion is formed between said resin molded article and said resin sheet, while said resin sheet is molded into the desired form.

11. A method according to claim 1, wherein said pin-shaped protrusion is connected to the mold corresponding thereto by way of a second pedestal having a cross-sectional area greater than a base portion of said pin-shaped protrusion and a desired height.

12. A method according to claim 1, wherein a part of a surface of said resin molded article is provided with a first shear surface made of a surface substantially in parallel with a closing direction of said first and second molds, while a part of a surface of said molds is provided with a second shear surface corresponding to said first shear surface; and
wherein, in the step of closing said first and second molds, a part of said resin sheet is cut off by a portion of said resin molded article including said first shear surface and by said second shear surface.

13. A method according to claim 12, wherein, in the step of closing said first and second molds, at least a part of the portion of said resin molded article including said first shear surface and at least a part of said second shear surface are brought into contact with each other, so as to cut off a part of said resin sheet.

14. A method according to claim 12, wherein, in the step of closing said first and second molds, at least a part of said first shear surface is shaved with said second shear surface, so as to cut off a part of said resin sheet.

15. A method according to claim 12, wherein said first shear surface is formed as a side face of a first protruded portion disposed on a surface of said resin molded article, whereas said second shear surface is formed as a side face of a second protruded portion disposed on a surface of said molds.

16. A method according to claim 12, wherein the portion of said resin molded article including said first shear surface and the portion of said first mold including said second shear surface has an overlapping width of not greater than 5 mm perpendicular to a closing direction of the molds.

17. A method according to claim 1, wherein a thermoplastic resin film is attached to at least a part of a surface of said porous fiber-reinforced thermoplastic resin sheet.
